# EUROPEAN PATENT APPLICATION

(11) **EP 4 654 306 A1**
(43) Date of publication of application: **26.11.2025**
(21) Application number: 24744560.4
(22) Date of filing: 11.01.2024
(51) Int. Cl.: H01M 8/04858, G05F 1/67, H01M 8/04225, H01M 8/04228, H01M 8/04302, H01M 8/04303

(54) **FUEL CELL SYSTEM, METHOD FOR OPERATING SAME, COMPUTER PROGRAM, AND RECORDING MEDIUM**

(30) Priority: 18.01.2023 JP 2023006110
(71) Applicant: Panasonic Intellectual Property Management Co., Ltd., Kadoma-shi, Osaka 571-0057 (JP)
(72) Inventor: KAWAZOE, Daisuke, Kadoma-shi, Osaka 571-0057 (JP); KARINO, Tsuyoshi, Kadoma-shi, Osaka 571-0057 (JP); MATSUMOTO, Taku, Kadoma-shi, Osaka 571-0057 (JP)
(74) Representative: Grünecker Patent- und Rechtsanwälte PartG mbB
(86) International application number: PCT/JP2024/000408
(87) International publication number: WO 2024/154637

(57) **Abstract**

In an operation plan (50) in a fuel cell system, first stop time ta1 is a time corresponding to a specific remaining period of a first fuel cell (5), and a time at which the first fuel cell (5) is switched from a power generating state to a stopped state. For all natural numbers J satisfying 2 ≤ J ≤ N, Jth stop time taJ is a time at which a Jth fuel cell (5) is switched from a power generating state to a stopped state, and is an earlier one of a time that is second predetermined period T2 before (J-1)th stop time ta(J-1) and a time corresponding to the specific remaining period of the Jth fuel cell (5). For all natural numbers J satisfying 1 ≤ J ≤ N, Jth start time tbJ is a time at which the Jth fuel cell (5) is switched from the stopped state to the power generating state, and a time that is first predetermined period T1 after Jth stop time taJ. The operation plan (50) does not include a period of time during which more than R fuel cells (5) among the first fuel cell (5) to the Nth fuel cell (5) are in a stopped state.

## Description

### TECHNICAL FIELD

The present disclosure relates to a fuel cell system, a method for operating the fuel cell system, a computer program, and a recording medium.

### BACKGROUND ART

In a fuel cell system, fuel cell stacks for generating electric power are sequentially switched over time. For example, Patent Literature (PTL) 1 discloses a fuel cell system that performs such control.

### CITATION LIST

### PATENT LITERATURE

[PTL 1] Japanese Unexamined Patent Application Publication No. 2012-018823

### SUMMARY OF THE INVENTION

### TECHNICAL PROBLEM

The present disclosure provides a technique suitable for continuously extracting electric power from a fuel cell system while ensuring the reliability of the fuel cell system.

### SOLUTION TO PROBLEM

The present disclosure provides a fuel cell system that includes: a first fuel cell to an Nth fuel cell each of which has an initial value of a power generatable period and a first predetermined period determined, N being a natural number that is greater than or equal to 2; and a control device that controls the first fuel cell to the Nth fuel cell. The control device includes an operation mode that includes a specific operation mode in which the control device controls the first fuel cell to the Nth fuel cell according to an operation plan. The operation plan includes a first stop time to an Nth stop time and a first start time to an Nth start time. When a remaining period of the power generatable period at a start of the specific operation mode is defined as a specific remaining period, the first stop time is a time corresponding to the specific remaining period of the first fuel cell, and a time at which the first fuel cell is switched from a power generating state to a stopped state. For all natural numbers J satisfying 2 ≤ J ≤ N, a Jth stop time is a time at which a Jth fuel cell is switched from a power generating state to a stopped state, and is an earlier one of a time that is a second predetermined period before a (J-1)th stop time and a time corresponding to the specific remaining period of the Jth fuel cell. For all natural numbers J satisfying 1 ≤ J ≤ N, a Jth start time is a time at which the Jth fuel cell is switched from the stopped state to the power generating state, and a time that is the first predetermined period after the Jth stop time. The operation plan does not include a period of time during which more than R fuel cells among the first fuel cell to the Nth fuel cell are in a stopped state, R being a natural number that is greater than or equal to 1 and less than N.

In another aspect, the present disclosure provides an operation method for operating a fuel cell system that includes a first fuel cell to an Nth fuel cell each of which has an initial value of a power generatable period and a first predetermined period determined, N being a natural number that is greater than or equal to 2. The operation method includes: controlling the first fuel cell to the Nth fuel cell according to an operation plan in a specific operation mode. The operation plan includes a first stop time to an Nth stop time and a first start time to an Nth start time. When a remaining period of the power generatable period at a start of the specific operation mode is defined as a specific remaining period, the first stop time is a time corresponding to the specific remaining period of the first fuel cell, and a time at which the first fuel cell is switched from a power generating state to a stopped state. For all natural numbers J satisfying 2 ≤ J ≤ N, a Jth stop time is a time at which a Jth fuel cell is switched from a power generating state to a stopped state, and is an earlier one of a time that is a second predetermined period before a (J-1)th stop time and a time corresponding to the specific remaining period of the Jth fuel cell. For all natural numbers J satisfying 1 ≤ J ≤ N, a Jth start time is a time at which the Jth fuel cell is switched from the stopped state to the power generating state, and a time that is the first predetermined period after the Jth stop time. The operation plan does not include a period of time during which more than R fuel cells among the first fuel cell to the Nth fuel cell are in a stopped state, R being a natural number that is greater than or equal to 1 and less than N.

### ADVANTAGEOUS EFFECTS OF INVENTION

The technique according to the present disclosure is suitable for continuously extracting electric power from a fuel cell system while ensuring the reliability of the fuel cell system.

### BRIEF DESCRIPTION OF THE DRAWINGS

[FIG. 1] FIG. 1 illustrates a configuration of a fuel cell system according to an embodiment.
[FIG. 2] FIG. 2 is an explanatory diagram of the number of power-generating fuel cells according to a first example.
[FIG. 3] FIG. 3 is an explanatory diagram of an operation plan according to the first example.
[FIG. 4] FIG. 4 is an explanatory diagram of a frequency at which one of a first fuel cell to an Nth fuel cell is switched from a power generating state to a stopped state in the first example.
[FIG. 5] FIG. 5 is an explanatory diagram of a frequency at which one of a first fuel cell to an Nth fuel cell is switched from a power generating state to a stopped state in a second example.
[FIG. 6] FIG. 6 is a flowchart for explaining generation of the operation plan according to the embodiment.

### DESCRIPTION OF EMBODIMENT

Hereinafter, an embodiment will be described in detail with reference to the drawings. However, more detailed explanation than necessary may be omitted. For example, detailed explanations of already well-known matters or duplicate explanations for substantially the same configuration may be omitted.

It should be noted that the accompanying drawings and the following description are provided for those skilled in the art to fully understand the present disclosure, and are not intended to limit the subject matter described in the claims.

### (Embodiment)

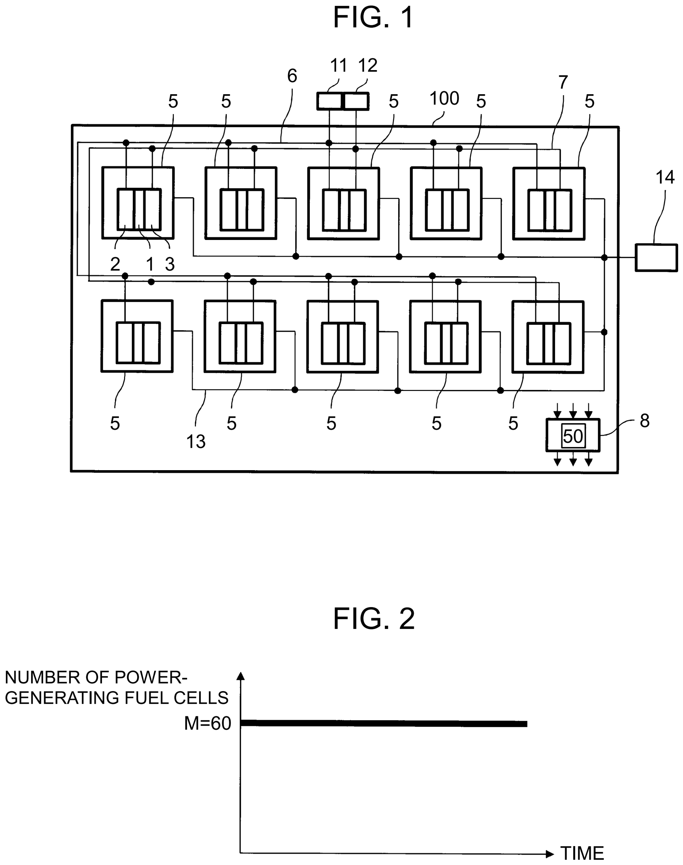

Hereinafter, an embodiment will be described with reference to FIG. 1 to FIG. 6.

### [1-1. Configuration of fuel cell system according to embodiment]

FIG. 1 illustrates a configuration of fuel cell system 100 according to the embodiment. Fuel cell system 100 includes a plurality of fuel cells 5, hydrogen-containing gas supply path 6, oxygen-containing gas supply path 7, control device 8, and power lines 13. The plurality of fuel cells 5 are connected in parallel to external load 14 via power lines 13. Load 14 is an electric load that consumes electric power.

Each of the plurality of fuel cells 5 includes electrolyte membrane 1, anode 2, and cathode 3. In fuel cell 5, electrolyte membrane 1 is disposed between anode 2 and cathode 3. Electrolyte membrane 1, anode 2, and cathode 3 form a stack. Each of anode 2 and cathode 3 includes a catalyst for promoting the reaction that extracts electrons. Anode 2 is connected to hydrogen-containing gas supply path 6. Cathode 3 is connected to oxygen-containing gas supply path 7. Hydrogen-containing gas is supplied from hydrogen-containing gas supply source 11 to anode 2 via hydrogen-containing gas supply path 6. Oxygen-containing gas is supplied from oxygen-containing gas supply source 12 to cathode 3 via oxygen-containing gas supply path 7. In fuel cell 5, electric power is generated by an electrochemical reaction of hydrogen-containing gas and oxygen-containing gas.

FIG. 1 illustrates ten fuel cells 5 for explanatory purposes. However, the number of fuel cells 5 is not particularly limited. The number of fuel cells 5 is at least two. The number of fuel cells 5 may be at least 10, at least 50, at least 100, at least 200, at least 500, at least 1000, or at least 3000. The plurality of fuel cells 5 can have the same configuration.

The hydrogen-containing gas may be pure hydrogen gas or gas obtained by steam reforming. Examples of hydrogen-containing gas supply source 11 include a hydrogen gas infrastructure and a reformer. The oxygen-containing gas is typically air. Examples of oxygen-containing gas supply source 12 include an air blower. Other devices such as flow control valves (not illustrated) are disposed in hydrogen-containing gas supply path 6 and oxygen-containing gas supply path 7.

Each fuel cell 5 is typically a polymer electrolyte fuel cell (PEFC). However, fuel cell 5 may be a solid oxide fuel cell (SOFC).

Control device 8 controls each of the plurality of fuel cells 5. Specifically, control device 8 controls the start and stop of each fuel cell 5. As a result, the output power of fuel cell system 100 is adjusted by control device 8. Control device 8 is, for example, a digital signal processor (DSP) that includes a computation circuit, a memory circuit, and the like. Examples of the computation circuit includes a central processing unit (CPU). Examples of the memory circuit include a memory.

Control device 8 may be a single controller. Control device 8 may include a plurality of controllers. In a specific example, control device 8 includes a primary controller and a plurality of subordinate controllers. The primary controller controls the plurality of subordinate controllers. Each of the plurality of subordinate controllers controls one or more of the plurality of fuel cells 5 which are included in fuel cell system 100 and are associated with the subordinate controller. The plurality of subordinate controllers may be located at physically distant positions from each other. The primary controller may be located at a physically distant position from the plurality of subordinate controllers.

Power lines 13 are connected to fuel cells 5 and load 14. The electric power generated by each fuel cell 5 is supplied to load 14 via power line 13.

### [1-2. Control based on operation plan according to embodiment]

Operations and actions of fuel cell system 100 configured as described above will be described below.

In the following description, the symbols "J", "N", "R", "M", "T1", "T2", and "D" will be used. In the present embodiment, these symbols are described as below.

J is a natural number. J is a parameter for various descriptions.

N is a natural number that is greater than or equal to 2. N is the number of fuel cells 5 included in fuel cell system 100 (hereinafter, referred to as the number of fuel cells 5 included). In other words, fuel cell system 100 includes N fuel cells 5. The expression "first fuel cel 5 to Nth fuel cell 5" refers to N fuel cells 5 assigned with the ordinal numbers. In the present embodiment, for all natural numbers J satisfying 2 ≤ J ≤ N, (J-1)th fuel cell 5 is assigned with a priority higher than the priority of Jth fuel cell 5.

In the present embodiment, control device 8 controls first fuel cell 5 to Nth fuel cell 5. Control device 8 includes one or more operation modes that include a specific operation mode. In the specific operation mode, control device 8 controls first fuel cell 5 to Nth fuel cell 5 according to operation plan 50. Operation plan 50 includes the first stop time to the Nth stop time and the first start time to the Nth start time. Control device 8 may include only the specific operation mode, or may include a plurality of operation modes that include the specific operation mode. In the present embodiment, the specific operation mode may be referred to as a "nonstop control mode".

Here, the expression "fuel cells 5 are controlled according to operation plan 50" will be described. In practice, errors may occur between the details of the control performed by control device 8 according to operation plan 50 and the actual operations of fuel cells 5. In the present embodiment, even in cases where such errors occur, it is considered that fuel cells 5 are controlled according to operation plan 50. For example, a case is considered where operation plan 50 is generated such that, at a given time, given fuel cell 5 is switched from the power generating state to the stopped state and another fuel cell 5 is switched from the stopped state to the power generating state. In such a case, in practice, it is possible that the another fuel cell 5 requires time to switch from the stopped state to the power generating state, and the time at which the another fuel cell 5 turns into the power generating state is delayed from the given time. Such a delay may cause a situation where the number of fuel cells 5 that are in the stopped state exceeds the number indicated by operation plan 50. Even in cases where such delays occur, it is considered that fuel cells 5 are controlled according to operation plan 50.

The expression "the first stop time to the Nth stop time" refers to N stop times assigned with the ordinal numbers. Specifically, "the first stop time to the Nth stop time" are the respective times at which first fuel cell 5 to Nth fuel cell 5 are switched from the power generating state to the stopped state. In the following description, the expressions such as first stop time ta1, second stop time ta2, third stop time ta3, fourth stop time ta4, fifth stop time ta5, ... and Nth stop time taN may be used.

The expression "the first start time to the Nth start time" refers to N start times assigned with the ordinal numbers. Specifically, "the first start time to the Nth start time" are the respective times at which first fuel cell 5 to Nth fuel cell 5 are switched from the stopped state to the power generating state. In the following description, the expressions such as first start time tb1, second start time tb2, third start time tb3, fourth start time tb4, fifth start time tb5, ... and Nth start time tbN may be used.

R is a natural number that is greater than or equal to 1 and less than N. R is the number of fuel cells 5 that are in the stopped state (hereinafter, referred to as the number of reserves) in operation plan 50. M is a natural number that is greater than or equal to 1 and less than N. M is the number of fuel cells 5 that are in the power generating state (hereinafter, referred to as the number of power-generating fuel cells) in operation plan 50. In operation plan 50 according to the present embodiment, the number of reserves R and the number of power-generating fuel cells M are maintained constant. More specifically, as can be understood from the description provided later, operation plan 50 is generated such that the number of reserves R takes a minimum value and the number of power-generating fuel cells M takes a maximum value. According to such operation plan 50, first fuel cell 5 to Nth fuel cell 5 are controlled. In the specific context described later, the expression "maximum number M" may be used.

T1 is the length of the period of time during which fuel cell 5 is stopped (hereinafter, referred to as a first predetermined period). In the present embodiment, first predetermined period T1 may be referred to as a stop period. Specifically, the stop period is a period of time during which fuel cell 5 is cooled. In the present embodiment, first predetermined period T1 is determined for each of N fuel cells 5. In a typical example, first predetermined periods T1 for N fuel cells 5 are equal to each other.

T2 is a period of time (hereinafter, referred to as a second predetermined period) that may be related to the stop time of fuel cell 5. In the present embodiment, second predetermined period T2 may be referred to as a staggered period. The details of second predetermined period T2 will be described later.

D is an initial value of the power generatable period of fuel cell 5. Determining initial value D can be beneficial. For example, when fuel cell 5 is operated for an excessively long period without an appropriate stop period, components other than hydrogen may accumulate on the cathode, potentially contaminating the cathode. When the cathode is contaminated, the output voltage of fuel cell 5 decreases. Thus, the "degradation" of fuel cell 5 occurs in which the output voltage of fuel cell 5 decreases. By appropriately determining initial value D, the degradation can be inhibited. In the present embodiment, initial value D is determined for each of N fuel cells 5. In a typical example, initial values D for N fuel cells 5 are equal to each other.

For all natural numbers J satisfying 1 ≤ J ≤ N, the power generation period of fuel cell 5 is counted. In the following description, the counted time may be referred to as "count period TC". Count period TC is reset when fuel cell 5 is stopped continuously for third predetermined period T3. In other words, count period TC is the period of time counted during which fuel cell 5 generated electric power continuously or intermittently without stopping continuously for at least third predetermined period T3. The "count period TC" regarding the intermittent power generation is the sum of the counted values of a plurality of power generation periods that are temporally separated from each other. In the present embodiment, third predetermined period T3 is equal to first predetermined period T1.

The "remaining power generatable period" is the difference obtained by subtracting count period TC of given fuel cell 5 from initial value D of the given fuel cell 5. In addition, the "time at which the power generatable period expires" is the time at which count period TC of fuel cell 5 reaches initial value D. In other words, the "time at which the power generatable period expires" is the time at which the remaining power generatable period becomes zero. The "specific remaining period" is the remaining period of the power generatable period at the start of a specific operation mode. In the present embodiment, the "remaining power generatable period" is determined by control device 8. Similarly, the "specific remaining period" is determined by control device 8.

### [1-2-1. Control based on operation plan in first example]

Hereinafter, control based on operation plan 50 according to the present embodiment will be described with reference to FIG. 2 to FIG. 4 relating to a first example. In the first example, the number of fuel cells included N, first predetermined period T1, and initial value D are as described below.
N = 61
T1 = two hours
D = 120 hours

The number of reserves R, the number of power-generating fuel cells M, and second predetermined period T2 take values that depend on the number of fuel cells included N, first predetermined period T1, and initial value D. As will be understood from the description provided later, in the first example, the number of reserves R, the number of power-generating fuel cells M, and second predetermined period T2 take the values described below.
R = 1
M=60
T2 = two hours

FIG. 2 is an explanatory diagram of the number of power-generating fuel cells M according to the first example. In FIG. 2, the horizontal axis represents time. The vertical axis represents the number of power-generating fuel cells M. As illustrated in FIG. 2, the number of power-generating fuel cells M is maintained constant according to operation plan 50 in the first example.

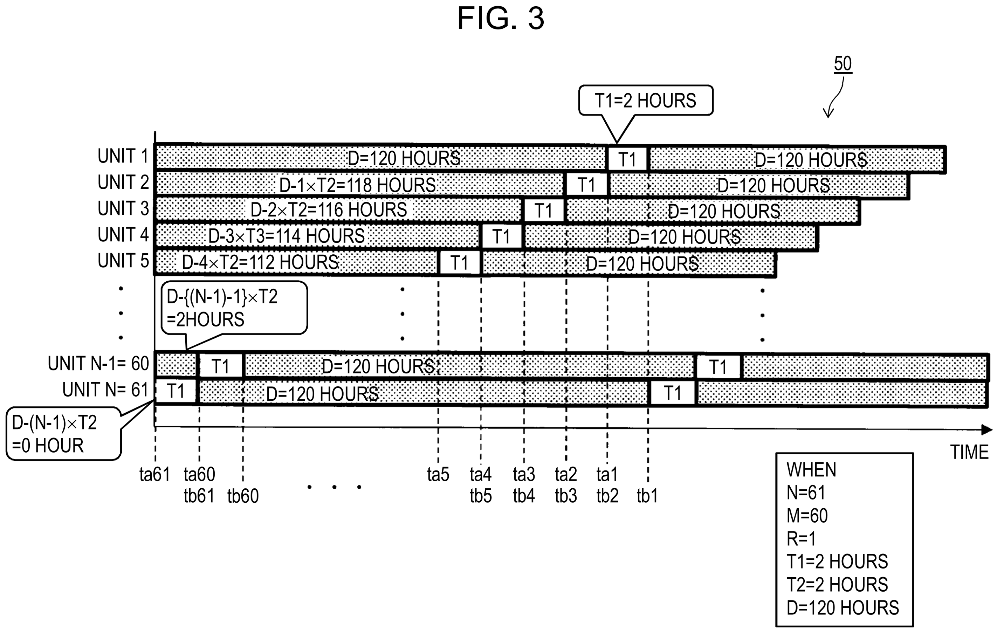

FIG. 3 is an explanatory diagram of operation plan 50 according to the first example. In FIG. 3, the horizontal axis represents time. In FIG. 3, unit 1, unit 2, unit 3, unit 4, unit 5, ... unit N refer to first fuel cell 5, second fuel cell 5, third fuel cell 5, fourth fuel cell 5, fifth fuel cell 5, ... and Nth fuel cell 5, respectively.

In the present embodiment, first stop time ta1 is the time corresponding to the specific remaining period of first fuel cell 5, and is the time at which first fuel cell 5 is switched from the power generating state to the stopped state. For all natural numbers J satisfying 2 ≤ J ≤ N, Jth stop time taJ is the time at which Jth fuel cell 5 is switched from the power generating state to the stopped state, and is the earlier (i.e., preceding) one of the time that is second predetermined period T2 before (J-1)th stop time ta(J-1) and the time corresponding to the specific remaining period of Jth fuel cell 5. For all natural numbers J satisfying 1 ≤ J ≤ N, Jth start time tbJ is the time at which Jth fuel cell 5 is switched from the stopped state to the power generating state, and is the time first predetermined period T1 after Jth stop time taJ. Operation plan 50 does not include a period of time during which more than R fuel cells 5 among first fuel cell 5 to Nth fuel cell 5 are in the stopped state. With this configuration, the number of power-generating fuel cells M can be maintained to be at least N-R while sequentially switching fuel cells 5 that are in the stopped state among first fuel cell 5 to Nth fuel cell 5. Therefore, by inhibiting the "degradation" of each fuel cell 5 in which the output voltage of fuel cell 5 decreases, it is possible to continuously obtain power generation from at least N-R number of fuel cells while ensuring the reliability of fuel cells 5.

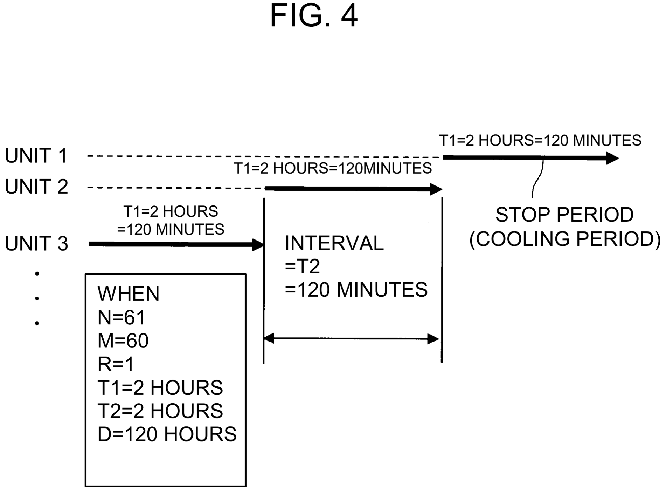

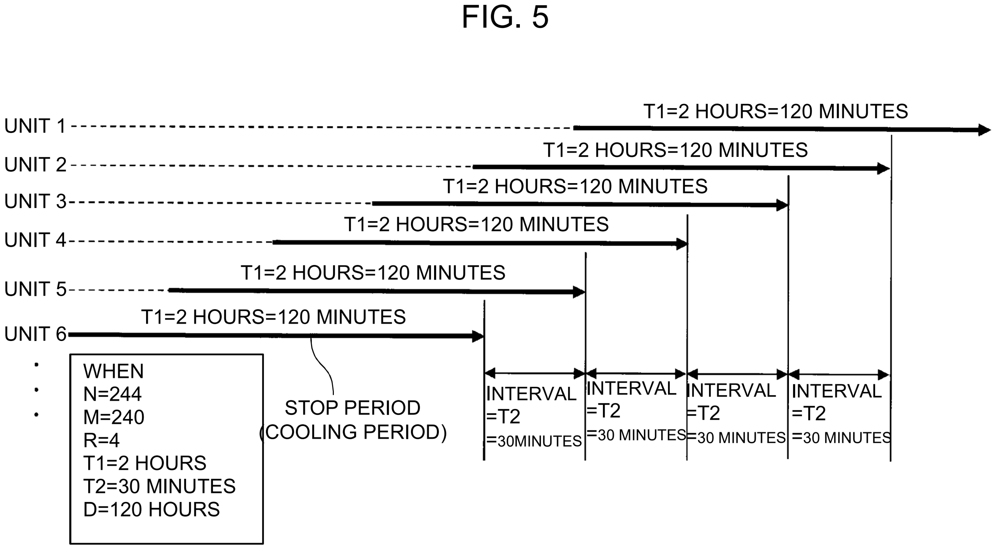

FIG. 3 and FIG. 4 illustrate a case in which "the earlier one of the time that is second predetermined period T2 before (J-1)th stop time ta(J-1) and the time corresponding to the specific remaining period of Jth fuel cell 5" is "the time that is second predetermined period T2 before (J-1)th stop time ta(J-1)". The same also applies to FIG. 5.

In the present embodiment, for all natural numbers J satisfying 2 ≤ J ≤ N, the specific remaining period of (J-1)th fuel cell 5 is greater than or equal to the specific remaining period of Jth fuel cell 5. This configuration allows the length of the power generatable period to be effectively used. This can reduce the number of times fuel cells 5 are stopped and started in fuel cell system 100 as a whole. As a result, it possible to inhibit the "degradation" of each fuel cell 5 in which the output voltage of fuel cell 5 decreases. For all natural numbers J satisfying 2 ≤ J ≤ N, there may be cases where the specific remaining period of (J-1)th fuel cell 5 is longer than the specific remaining period of Jth fuel cell 5. On the other hand, for at least one natural number J satisfying 2 ≤ J ≤ N, there may be cases where the specific remaining period of (J-1)th fuel cell 5 is equal to the specific remaining period of Jth fuel cell 5. In this case, for example, the cumulative power generation period of (J-1)th fuel cell 5 at the start of the specific operation mode is shorter than the cumulative power generation period of Jth fuel cell 5 at the start of the specific operation mode.

In operation plan 50 according to the present embodiment, M is maximized by at least partially staggering the periods during which first fuel cell to Nth fuel cell 5 are in the stopped state with respect to each other and maintaining the number of fuel cells 5 that are in the power generating state among first fuel cell 5 to Nth fuel cell 5 to be M. Here, R = N - M is satisfied. With the number of reserves R in this configuration, fuel cell system 100 as a whole is capable of continuously generating a large amount of electric power.

R can be the smallest natural number that is greater than or equal to N × T1/(D + T1) or the largest natural number less than or equal to N × T1/(D + T1). With the number of reserves R in this configuration, fuel cell system 100 as a whole is capable of continuously generating a large amount of electric power.

The output power of fuel cell system 100 may be less than the electric power required by load 14. In this case, for example, electric power is supplied to load 14 from a power storage device (not illustrated) in fuel cell system 100. This can make up for the power shortage.

In operation plan 50 according to the present embodiment, the number of fuel cells that are in the stopped state among first fuel cell 5 to Nth fuel cell 5 is maintained to be R. With this configuration, fuel cell system 100 as a whole is capable of continuously generating a constant mount of and a large amount of electric power.

In the present embodiment, T2 is a value given by T1/R. T2 in this configuration makes it possible to continuously generate a large amount of power. "The value given by T1/R" may be T1/R itself. When T1/R is not divisible, the "value given by T1/R" may be the value obtained by rounding T1/R to a predetermined number of digits. In the case where control device 8 includes control cycles, the "value given by T1/R" may be the value that is the closest to T1/R among the integer multiples of the control cycle.

In the present embodiment, for all natural numbers J satisfying 1 ≤ J ≤ N, the time corresponding to the specific remaining period of Jth fuel cell 5 is the time at which the power generatable period of Jth fuel cell 5 expires. This configuration makes it possible to effectively use the length of the power generatable period for at least one fuel cell 5.

In operation plan 50 according to the present embodiment, for all natural numbers J satisfying 1 ≤ J ≤ N, Jth fuel cell 5 repeats, after Jth start time tbJ, generating electric power continuously for a period of time equal to initial value D and stopping for first predetermined period T1. In operation plan 50 according to the present embodiment, in a similar manner to the period from Nth stop time taN to first start time tb1, the number of fuel cells to be stopped among first fuel cell 5 to Nth fuel cell 5 is maintained to be less than or equal to R even after Jth start time tbJ. Specifically, in a similar manner to the period from Nth stop time taN to first start time tb1, the number of fuel cells to be stopped among first fuel cell 5 to Nth fuel cell 5 is maintained to be R even after Jth start time tbJ.

FIG. 4 is an explanatory diagram of the frequency at which one of first fuel cell 5 to Nth fuel cell 5 is switched from the power generating state to the stopped state in the first example. In the example of FIG. 4, the time interval during which this switching can occur is equal to second predetermined period T2 which is also equal to first predetermined period T1.

### [1-2-2. Operation plan in second example]

Hereinafter, a second example will be described. In the second example, descriptions common to the first example may be omitted. In the second example, the number of fuel cells included N, first predetermined period T1, and initial value D are as described below.
N = 244
T1 = 2 hours
D = 120 hours

As described above, the number of reserves R, the number of power-generating fuel cells M, and second predetermined period T2 take values that depend on the number of fuel cells included N, first predetermined period T1, and initial value D. In the second example, the number of reserves R, the number of power-generating fuel cells M, and second predetermined period T2 take the values described below.
R=4
M = 240
T2 = 30 minutes

FIG. 5 is an explanatory diagram of the frequency at which one of first fuel cell 5 to Nth fuel cell 5 is switched from the power generating state to the stopped state in the second example. In the example of FIG. 5, the time interval during which this switching can occur is equal to second predetermined period T2 which is also equal to 1/4 of first predetermined period T1.

In the present embodiment, a case is considered where first predetermined period T1 = 2 hours, initial value D = 120 hours, and the number of reserves R is the smallest natural number that is greater than or equal to N × T1/(D + T1). In this case, the number of reserves R and second predetermined period T2 for setting the maximum number M to 1 to 60, 61 to 120, 121 to 180, 181 to 240, and 241 to 250 will be shown in Table 1 below.

**[Table 1]**

| Maximum number M | Number of reserves R | Second predetermined period T2 |
|---|---|---|
| 1 to 60 | 1 | 120 minutes |
| 61 to 120 | 2 | 60 minutes |
| 121 to 180 | 3 | 40 minutes |
| 181 to 240 | 4 | 30 minutes |
| 241 to 250 | 5 | 24 minutes |

### [1-2-3. Generation of operation plan according to embodiment]

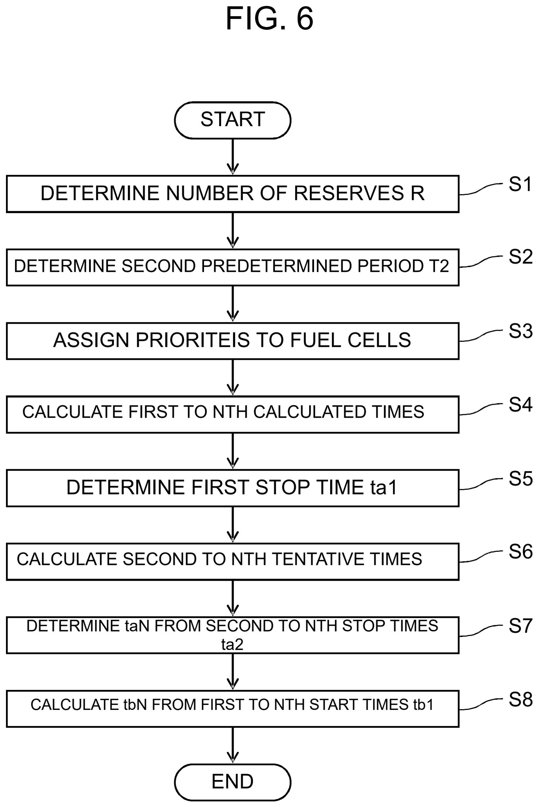

Operation plan 50 is generated by control device 8. FIG. 6 is a flowchart for explaining the generation of operation plan 50 according to the embodiment. In the present embodiment, count period TC is counted by control device 8.

In step S1, control device 8 determines the number of reserves R. In the present embodiment, control device 8 calculates N × T1/(D + T1). When the calculated value includes decimal values, the calculated value is corrected to a natural number by rounding up to the nearest whole number. This determines R. R thus determined is the smallest natural number that is greater than or equal to N × T1/(D + T1).

In step S1 according to a variation, control device 8 calculates N × T1/(D + T1). When the calculated value includes decimal values, the calculated value is corrected to a natural number by rounding to the nearest whole number. This determines R. R thus determined is the smallest natural number that is greater than or equal to N × T1/(D + T1) or the largest natural number that is less than or equal to N × T1/(D + T1).

In step S2, control device 8 determines second predetermined period T2. In the present embodiment, control device 8 determines T2 as a value given by T1/R.

In step S3, control device 8 assigns priorities to N fuel cells 5 according to at least one rule. With this, control device 8 classifies N fuel cells 5 into first fuel cell 5 to Nth fuel cell 5.

The at least one rule includes a first rule. The first rule is that the greater the difference obtained by subtracting count period TC of fuel cell 5 from initial value D of fuel cell 5, the higher the priority of fuel cell 5. Specifically, the first rule is that the greater the difference obtained by subtracting count period TC of fuel cell 5 at the time of generation of operation plan 50 from initial value D of fuel cell 5, the higher the priority of fuel cell 5.

The at least one rule includes a second rule. The second rule is that when the difference obtained by subtracting count period TC of fuel cell 5 from initial value D of fuel cell 5 is the same, the shorter the cumulative power generation period of fuel cell 5, the higher the priority of fuel cell 5. Specifically, the second rule is that, when the difference obtained by subtracting count period TC of fuel cell 5 at the time of generation of operation plan 50 from initial value D of fuel cell 5 is the same, the shorter the cumulative power generation period of fuel cell 5 at the time of generation of operation plan 50, the higher the priority of fuel cell 5.

In the specific example of step S3, N fuel cells 5 are sorted in descending order of the difference obtained by subtracting count period TC of fuel cell 5 from initial value D of fuel cell 5. Fuel cells 5 with the same difference are sorted in ascending order of cumulative power generation period of fuel cell 5. Based on the result of the sorting, priorities are assigned to N fuel cells 5. Accordingly, control device 8 classifies N fuel cells 5 into first fuel cell 5 to Nth fuel cell 5. In the context above, the expression "count period TC of fuel cell 5" specifically means "count period TC of fuel cell 5 at the time of generation of operation plan 50". The expression "the cumulative power generation period of fuel cell 5" is specifically "the cumulative power generation period of fuel cell 5 at the time of generation of operation plan 50".

In step S4, control device 8 calculates the Jth calculated time for all natural numbers J satisfying 1 ≤ J ≤ N, based on initial value D of Jth fuel cell 5 and count period TC of Jth fuel cell 5. Specifically, for all natural numbers J satisfying 1 ≤ J ≤ N, control device 8 calculates the Jth calculated time based on initial value D of Jth fuel cell 5 and count period TC of Jth fuel cell 5 at the time of generation of operation plan 50. More specifically, for all natural numbers J satisfying 1 ≤ J ≤ N, control device 8 calculates the difference by subtracting count period TC of Jth fuel cell 5 at the time of generation of operation plan 50 from initial value D of Jth fuel cell 5, and calculates the Jth calculated time by adding the obtained difference to the time of generation of operation plan 50.

In step S5, control device 8 determines the first calculated time as first stop time ta1.

In step S6, control device 8 calculates the Jth tentative time by subtracting second predetermined period T2 from (J-1)th stop time ta(J-1) for all natural numbers J satisfying 2 ≤ J ≤ N.

In step S7, for all natural numbers J satisfying 2 ≤ J ≤ N, control device 8 determines the earlier one of the Jth tentative time and the Jth calculated time as Jth stop time taJ.

In step S8, for all natural numbers J satisfying 1 ≤ J ≤ N, control device 8 calculates Jth start time tbJ by adding first predetermined period T1 to Jth stop time taJ.

Control device 8 generates operation plan 50 that does not include a period of time during which more than R fuel cells 5 among first fuel cell 5 to Nth fuel cell 5 are in the stopped state through steps S1 to S8.

The above descriptions of steps S1 to S8 are not intended to indicate that steps S1 to S8 are always required to be performed in the specific operation mode. In addition, the above descriptions are not intended to limit the interpretation of the order in which operation plan 50 is generated.

In one specific example, steps S1 and S2 are performed before the start of the specific operation mode. Steps S3 to S8 are executed in the specific operation mode. With respect to steps S5 to S8, control device 8 executes the processes in the following order: (1), (2), (3), (4), (5) ... (N). In other words, for all natural numbers J satisfying 1 ≤ J ≤ N, control device 8 executes the process of "determining Jth stop time taJ and then determining Jth start time tbJ" in the order in which J increases by one.
(1) First stop time ta1 is determined, and then first start time tb1 is determined.
(2) Second stop time ta2 is determined, and then second start time tb2 is determined.
(3) Third stop time ta3 is determined, and then third start time tb3 is determined.
(4) Fourth stop time ta4 is determined, and then fourth start time tb4 is determined.
(5) Fifth stop time ta5 is determined, and then fifth start time tb5 is determined.
(N) Nth stop time taN is determined, and then Nth start time tbN is determined.

### [1-3. Advantageous effects, etc.]

According to the present embodiment, it is possible to continuously extract electric power from fuel cell system 100 while ensuring the reliability of fuel cell system 100. Specifically, it is possible to realize control that maintains the electric power generated by fuel cell system 100 as a whole to be constant while sequentially switching fuel cells 5 that are stopped. Such a control can be used for various purposes.

### (Additional information)

The following techniques are disclosed by the present disclosure.

### (Technique 1)

A fuel cell system including: a first fuel cell to an Nth fuel cell each of which has an initial value of a power generatable period and a first predetermined period determined, N being a natural number that is greater than or equal to 2; and a control device that controls the first fuel cell to the Nth fuel cell. The control device includes an operation mode that includes a specific operation mode in which the control device controls the first fuel cell to the Nth fuel cell according to an operation plan. The operation plan includes a first stop time to an Nth stop time and a first start time to an Nth start time. When a remaining period of the power generatable period at a start of the specific operation mode is defined as a specific remaining period, the first stop time is a time corresponding to the specific remaining period of the first fuel cell, and a time at which the first fuel cell is switched from a power generating state to a stopped state. For all natural numbers J satisfying 2 ≤ J ≤ N, a Jth stop time is a time at which a Jth fuel cell is switched from a power generating state to a stopped state, and is an earlier one of a time that is a second predetermined period before a (J-1)th stop time and a time corresponding to the specific remaining period of the Jth fuel cell. For all natural numbers J satisfying 1 ≤ J ≤ N, a Jth start time is a time at which the Jth fuel cell is switched from the stopped state to the power generating state, and a time that is the first predetermined period after the Jth stop time. The operation plan does not include a period of time during which more than R fuel cells among the first fuel cell to the Nth fuel cell are in a stopped state, R being a natural number that is greater than or equal to 1 and less than N.

Technique 1 is suitable for continuously extracting electric power from a fuel cell system while ensuring the reliability of the fuel cell system.

### (Technique 2)

The fuel cell system according to technique 1, in which, for the all natural numbers J satisfying 2 ≤ J ≤ N, the specific remaining period of a (J-1)th fuel cell is longer than or equal to the specific remaining period of the Jth fuel cell.

Technique 2 facilitates inhibiting the degradation of each fuel cell.

### (Technique 3)

The fuel cell system according to technique 1 or 2, in which, in the operation plan, M is maximized by at least partially staggering periods of time during which the first fuel cel to the Nth fuel cel are in the stopped state with respect to each other and maintaining a total number of fuel cells in the power generating state among the first fuel cell to the Nth fuel cell to be M, M being a natural number greater than or equal to 1 and less than N, and R = N - M is satisfied.

### (Technique 4)

The fuel cell system according to technique 3, in which, in the operation plan, the total number of fuel cells in the stopped state among the first fuel cell to the Nth fuel cell is maintained to be R.

### (Technique 5)

The fuel cell system according to technique 3 or 4, in which, when the first predetermined period is represented by T1 and the second predetermined period is represented by T2, T2 is a value given by T1/R.

### (Technique 6)

The fuel cell system according to any one of techniques 1 to 5, in which, when the initial value of each of the first fuel cell to the Nth fuel cell is represented by D, and the first predetermined period is represented by T1, R is a smallest natural number that is greater than or equal to N × T1/(D + T1) or a largest natural number that is less than or equal to N × T1/(D + T1).

With R according to technique 3 and technique 6, the fuel cell system as a whole is capable of easily generating a large amount of electric power continuously.

### (Technique 7)

The fuel cell system according to claim 6, in which, in the operation plan, a total number of fuel cells in the stopped state among the first fuel cell to the Nth fuel cell is maintained to be R.

With R according to technique 4 and technique 7, the fuel cell system as a whole is capable of easily generating a constant amount of and a large amount of electric power continuously.

### (Technique 8)

The fuel cell system according to technique 6 or technique 7, in which, when the second predetermined period is represented by T2, T2 is a value given by T1/R.

T2 according to technique 5 and technique 8 allows a large amount of electric power to be continuously generated.

### (Technique 9)

The fuel cell system according to any one of techniques 1 to 8, in which, for the all natural numbers J satisfying 1 ≤ J ≤ N, the time corresponding to the specific remaining period of the Jth fuel cell is a time at which the power generatable period of the Jth fuel cell expires.

According to technique 9, it is possible to effectively use the length of the power generatable period for at least one fuel cell.

### (Technique 10)

The fuel cell system according to any one of techniques 1 to 9, in which the control device generates the operation plan which does not include the period of time during which the more than R fuel cells among the first fuel cell to the Nth fuel cell are in the stopped state by executing: counting a power generation period of the Jth fuel cell for the all natural numbers J satisfying 1 ≤ J ≤ N; calculating, for the all natural numbers J satisfying 1 ≤ J ≤ N, a Jth calculated time based on the initial value of the Jth fuel cell and the power generation period counted for the Jth fuel cell; determining the first calculated time as the first stop time; calculating, for the all natural numbers satisfying 2 ≤ J ≤ N, a Jth tentative time by subtracting the second predetermined period from the (J-1)th stop time; determining, as the Jth stop time, an earlier one of the Jth tentative time and the Jth calculated time for the all natural numbers satisfying 2 ≤ J ≤ N; and calculating, for the all natural numbers satisfying 1 ≤ J ≤ N, the Jth start time by adding the first predetermined period to the Jth stop time.

Technique 10 is suitable for generating an operation plan that allows electric power to be continuously extracted from the fuel cell system while ensuring the reliability of the fuel cell system.

### (Technique 11)

The fuel cell system according to any one of techniques 1 to 10, in which, for the all natural numbers J satisfying 2 ≤ J ≤ N, a priority higher than a priority of the Jth fuel cell is assigned to the (J-1)th fuel cell, the control device classifies the N fuel cells into the first fuel cell to the Nth fuel cell by assigning priorities to N fuel cells according to at least one rule, the at least one rule includes a first rule, and the first rule is that with a greater difference obtained by subtracting a power generation period counted for a fuel cell from the initial value of the fuel cell, the priority of the fuel cell is higher.

Technique 11 is suitable for generating an operation plan that is suitable for inhibiting the degradation of each fuel cell.

### (Technique 12)

An operation method for operating a fuel cell system that includes a first fuel cell to an Nth fuel cell each of which has an initial value of a power generatable period and a first predetermined period determined, N being a natural number that is greater than or equal to 2, the operation method includes controlling the first fuel cell to the Nth fuel cell according to an operation plan in a specific operation mode. The operation plan includes a first stop time to an Nth stop time and a first start time to an Nth start time, when a remaining period of the power generatable period at a start of the specific operation mode is defined as a specific remaining period, the first stop time is a time corresponding to the specific remaining period of the first fuel cell, and a time at which the first fuel cell is switched from a power generating state to a stopped state, for all natural numbers J satisfying 2 ≤ J ≤ N, a Jth stop time is a time at which a Jth fuel cell is switched from a power generating state to a stopped state, and is an earlier one of a time that is a second predetermined period before a (J-1)th stop time and a time corresponding to the specific remaining period of the Jth fuel cell, for all natural numbers J satisfying 1 ≤ J ≤ N, a Jth start time is a time at which the Jth fuel cell is switched from the stopped state to the power generating state, and a time that is the first predetermined period after the Jth stop time, and the operation plan does not include a period of time during which more than R fuel cells among the first fuel cell to the Nth fuel cell are in a stopped state, R being a natural number that is greater than or equal to 1 and less than N.

### (Technique 13)

A computer program includes: an instruction for causing a computer to execute the operation method according to technique 12 when the computer program is executed by a computer.

### (Technique 14)

A non-transitory computer-readable recording medium having recorded thereon the computer program according to technique 13.

Technique 12 to technique 14 are suitable for continuously extracting electric power from a fuel cell system while ensuring the reliability of the fuel cell system.

The computer can include a processor and a memory. The processor is, for example, a central processing unit (CPU), an application specific integrated circuit (ASIC), or a field programmable gate array (FPGA).

The memory is, for example, a semiconductor recording medium, a magnetic recording medium, a magnetooptical recording medium, or an optical recording medium. The semiconductor recording medium is, for example, a secure digital (SD) card, a universal serial bus (USB) memory, or a solid state drive (SSD). The magnetic recording medium is, for example, a hard disk drive, or a flexible disk. The magnetooptical recording medium is, for example, a magneto optical disk (MO). The optical recording medium is, for example, a compact disc (CD), or a digital versatile disc (DVD).

Unless a contradiction arises, the configurations according to technique 1 to technique 11 are applicable to technique 12 to technique 14, and the configurations according to technique 12 to technique 14 are applicable to technique 1 to technique 11.

### INDUSTRIAL APPLICABILITY

The technique according to the present disclosure is useful for a fuel cell system including a plurality of fuel cells.

### REFERENCE MARKS IN THE DRAWINGS

- 1: electrolyte membrane
- 2: anode
- 3: cathode
- 5: fuel cell
- 6: hydrogen-containing gas supply path
- 7: oxygen-containing gas supply path
- 8: control device
- 11: hydrogen-containing gas supply source
- 12: oxygen-containing gas supply source
- 13: power line
- 14: load
- 50: operation plan
- 100: fuel cell system

## Claims

1. A fuel cell system comprising:
a first fuel cell to an Nth fuel cell each of which has an initial value of a power generatable period and a first predetermined period determined, N being a natural number that is greater than or equal to 2; and
a control device that controls the first fuel cell to the Nth fuel cell,
wherein the control device includes an operation mode that includes a specific operation mode in which the control device controls the first fuel cell to the Nth fuel cell according to an operation plan,
the operation plan includes a first stop time to an Nth stop time and a first start time to an Nth start time,
when a remaining period of the power generatable period at a start of the specific operation mode is defined as a specific remaining period,
the first stop time is a time corresponding to the specific remaining period of the first fuel cell, and a time at which the first fuel cell is switched from a power generating state to a stopped state,
for all natural numbers J satisfying 2 ≤ J ≤ N, a Jth stop time is a time at which a Jth fuel cell is switched from a power generating state to a stopped state, and is an earlier one of a time that is a second predetermined period before a (J-1)th stop time and a time corresponding to the specific remaining period of the Jth fuel cell,
for all natural numbers J satisfying 1 ≤ J ≤ N, a Jth start time is a time at which the Jth fuel cell is switched from the stopped state to the power generating state, and a time that is the first predetermined period after the Jth stop time, and
the operation plan does not include a period of time during which more than R fuel cells among the first fuel cell to the Nth fuel cell are in a stopped state, R being a natural number that is greater than or equal to 1 and less than N.

2. The fuel cell system according to claim 1,
wherein, for the all natural numbers J satisfying 2 ≤ J ≤ N, the specific remaining period of a (J-1)th fuel cell is longer than or equal to the specific remaining period of the Jth fuel cell.

3. The fuel cell system according to claim 1 or claim 2,
wherein, in the operation plan, M is maximized by at least partially staggering periods of time during which the first fuel cel to the Nth fuel cel are in the stopped state with respect to each other and maintaining a total number of fuel cells in the power generating state among the first fuel cell to the Nth fuel cell to be M, M being a natural number greater than or equal to 1 and less than N, and
R = N - M is satisfied.

4. The fuel cell system according to claim 3,
wherein, in the operation plan, the total number of fuel cells in the stopped state among the first fuel cell to the Nth fuel cell is maintained to be R.

5. The fuel cell system according to claim 3,
wherein, when the first predetermined period is represented by T1 and the second predetermined period is represented by T2, T2 is a value given by T1/R.

6. The fuel cell system according to claim 1 or claim 2,
wherein, when the initial value of each of the first fuel cell to the Nth fuel cell is represented by D, and the first predetermined period is represented by T1,
R is a smallest natural number that is greater than or equal to N × T1/(D + T1) or a largest natural number that is less than or equal to N × T1/(D + T1).

7. The fuel cell system according to claim 6,
wherein, in the operation plan, a total number of fuel cells in the stopped state among the first fuel cell to the Nth fuel cell is maintained to be R.

8. The fuel cell system according to claim 6,
wherein, when the second predetermined period is represented by T2,
T2 is a value given by T1/R.

9. The fuel cell system according to claim 1 or claim 2,
wherein, for the all natural numbers J satisfying 1 ≤ J ≤ N, the time corresponding to the specific remaining period of the Jth fuel cell is a time at which the power generatable period of the Jth fuel cell expires.

10. The fuel cell system according to claim 1 or claim 2,
wherein the control device generates the operation plan which does not include the period of time during which the more than R fuel cells among the first fuel cell to the Nth fuel cell are in the stopped state by executing:
counting a power generation period of the Jth fuel cell for the all natural numbers J satisfying 1 ≤ J ≤ N;
calculating, for the all natural numbers J satisfying 1 ≤ J ≤ N, a Jth calculated time based on the initial value of the Jth fuel cell and the power generation period counted for the Jth fuel cell;
determining the first calculated time as the first stop time;
calculating, for the all natural numbers satisfying 2 ≤ J ≤ N, a Jth tentative time by subtracting the second predetermined period from the (J-1)th stop time;
determining, as the Jth stop time, an earlier one of the Jth tentative time and the Jth calculated time for the all natural numbers satisfying 2 ≤ J ≤ N; and
calculating, for the all natural numbers satisfying 1 ≤ J ≤ N, the Jth start time by adding the first predetermined period to the Jth stop time.

11. The fuel cell system according to claim 1 or claim 2,
wherein, for the all natural numbers J satisfying 2 ≤ J ≤ N, a priority higher than a priority of the Jth fuel cell is assigned to the (J-1)th fuel cell,
the control device classifies the N fuel cells into the first fuel cell to the Nth fuel cell by assigning priorities to N fuel cells according to at least one rule,
the at least one rule includes a first rule, and
the first rule is that with a greater difference obtained by subtracting a power generation period counted for a fuel cell from the initial value of the fuel cell, the priority of the fuel cell is higher.

12. An operation method for operating a fuel cell system that includes a first fuel cell to an Nth fuel cell each of which has an initial value of a power generatable period and a first predetermined period determined, N being a natural number that is greater than or equal to 2, the operation method comprising:
controlling the first fuel cell to the Nth fuel cell according to an operation plan in a specific operation mode,
wherein the operation plan includes a first stop time to an Nth stop time and a first start time to an Nth start time,
when a remaining period of the power generatable period at a start of the specific operation mode is defined as a specific remaining period,
the first stop time is a time corresponding to the specific remaining period of the first fuel cell, and a time at which the first fuel cell is switched from a power generating state to a stopped state,
for all natural numbers J satisfying 2 ≤ J ≤ N, a Jth stop time is a time at which a Jth fuel cell is switched from a power generating state to a stopped state, and is an earlier one of a time that is a second predetermined period before a (J-1)th stop time and a time corresponding to the specific remaining period of the Jth fuel cell,
for all natural numbers J satisfying 1 ≤ J ≤ N, a Jth start time is a time at which the Jth fuel cell is switched from the stopped state to the power generating state, and a time that is the first predetermined period after the Jth stop time, and
the operation plan does not include a period of time during which more than R fuel cells among the first fuel cell to the Nth fuel cell are in a stopped state, R being a natural number that is greater than or equal to 1 and less than N.

13. A computer program comprising:
an instruction for causing a computer to execute the operation method according to claim 12 when the computer program is executed by a computer.

14. A non-transitory computer-readable recording medium having recorded thereon the computer program according to claim 13.
